# FASCICULE DE BREVET EUROPEEN

(11) **EP 0 352 178 B1**
(45) Date de publication et mention de la délivrance du brevet: **22.09.1993**
(21) Numéro de dépôt: 89402025.4
(22) Date de dépôt: 17.07.1989
(51) Int. Cl.: B62D 17/00, B60G 3/26

(54) **Dispositif de réglage de l'angle de carrossage d'un véhicule**
Vorrichtung zur Einstellung des Sturzes an einem Fahrzeug
Apparatus for the adjustment of the camber of a vehicle

(30) Priorité: 18.07.1988 FR 8809686
(43) Date de publication de la demande: 24.01.1990
(73) Titulaire: ELF FRANCE, Société Anonyme dite:, 92400 Courbevoie (FR)
(72) Inventeur: Fayard, Jean-Claude, F-69003 Lyon (FR)
(74) Mandataire: Timoney, Ian Charles Craig

(56) Documents cités:
- EP-A- 0 246 116
- FR-A- 940 482
- FR-A- 1 082 796
- FR-A- 2 082 521
- US-A- 2 115 256
- US-A- 2 828 969
- US-A- 4 796 720
- PATENT ABSTRACTS OF JAPAN, vol. 8, no. 238 (M-535)[1675], 31 octobre 1984; & JP-A-59 118 514 (MISAO AYABE) 09-07-1984

## Description

La présente invention concerne un dispositif de règlage de l'angle de carrossage d'un véhicule, du type défini dans le préambule de la revendication 1 et connu par exemple par FR-A-2 0 82 521.

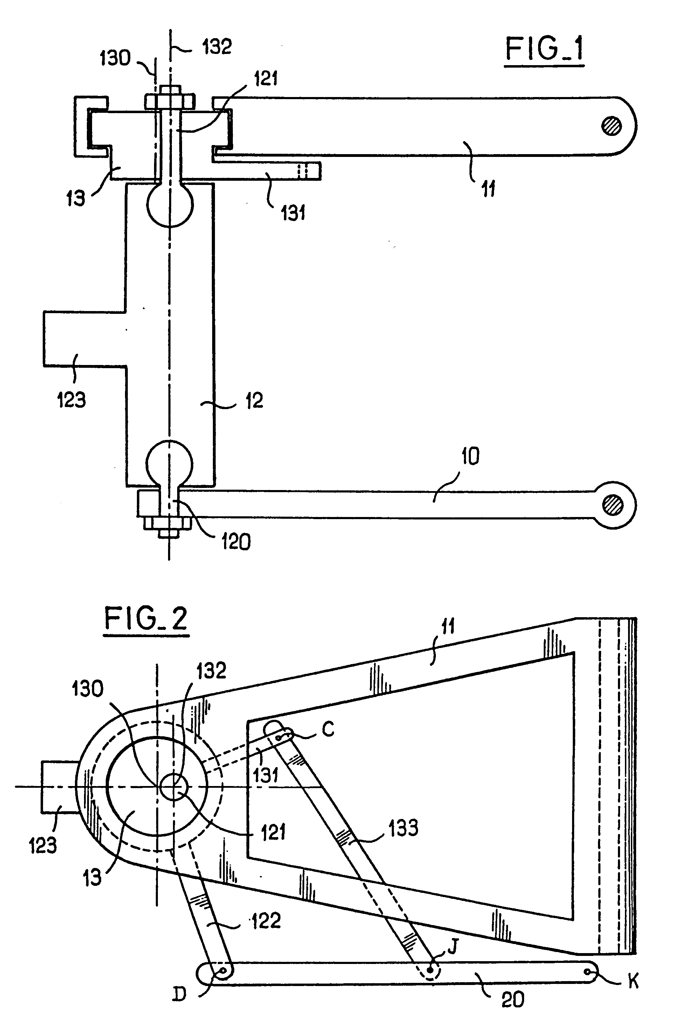

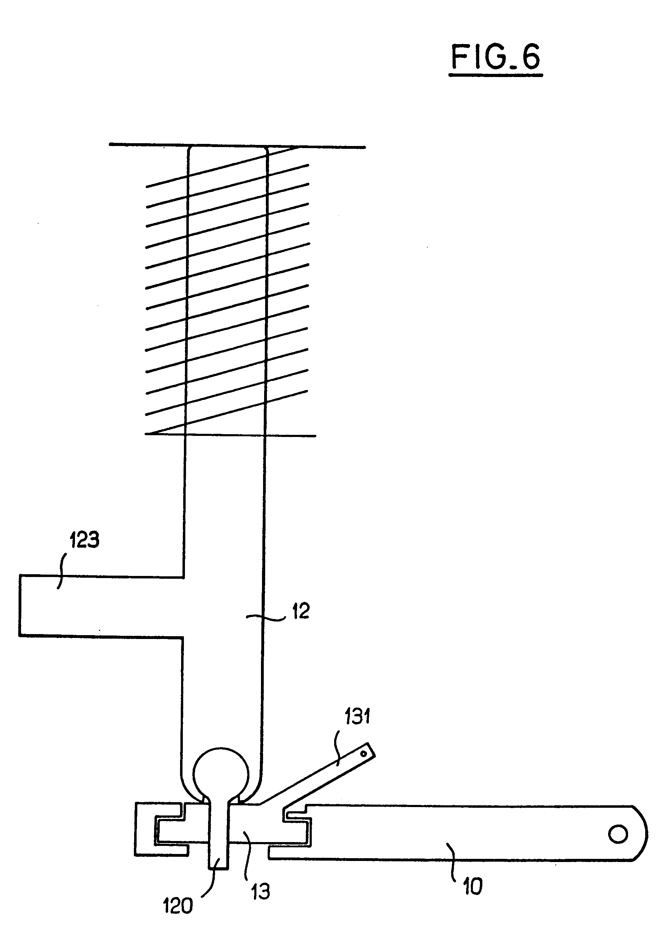

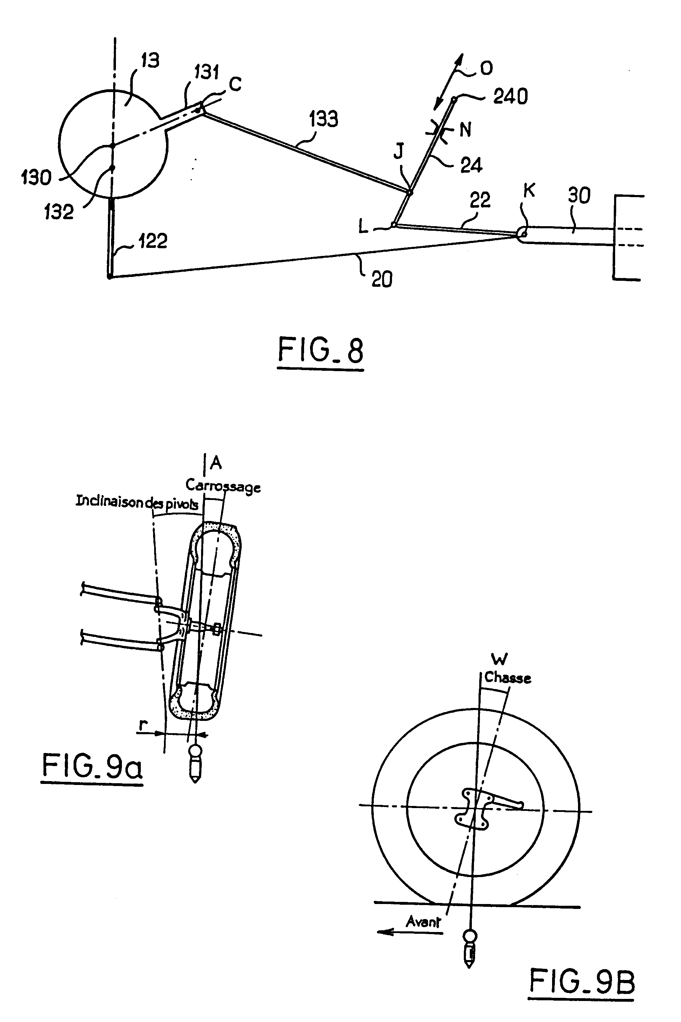

Dans les véhicules modernes équipés, soit d'une suspension type Mac Pherson (figure 6) soit d'une suspension à double triangle (figure 1), l'angle de carrossage des roues directrices joue un rôle important dans le comportement du véhicule. Sur la plupart des véhicules cet angle est, soit nul, soit toujours très faible et choisi positif ou négatif. Pour fixer les idées nous rappelons que l'angle de carrossage est l'angle aigu (A, fig 9) que fait une verticale avec le plan médian de la roue. Cet angle est dit négatif lorsque l'axe de la roue par rapport à la verticale rentre à l'intérieur. Cet angle est dit positif quand à l'inverse l'axe de la roue s'éloigne de la verticale, comme représenté sur la figure 9. La figure 9B représente l'angle de chasse (W). Cet angle (W) est l'angle que fait l'axe de pivotement de la fusée d'une roue avec une verticale. Si la trace de l'axe de pivotement sur le plan d'appui est située en avant du centre de la surface de contact du pneumatique, on dit qu'il y a chasse positive. Dans le cas contraire, il y a chasse négative. Dans les véhicules de l'art antérieur on cherche le meilleur compromis entre l'angle de carrossage et l'angle de chasse. Ce compromis doit permettre de minimiser les inconvénients tels qu'une usure anormale des pneumatiques, l'instabilité du véhicule, le désagrément de conduite ou les effets de réaction dans le volant. Ainsi en général l'angle de carrossage est positif pour les voitures particulières et négatif sur les voitures de sport très rapides.

Il est connu par le brevet FR-A-2 082 521, un dispositif permettant de régler le carrossage d'un véhicule à l'aide d'excentriques réglables en rotation et qui, une fois le réglage souhaité obtenu, sont immobilisés par des écrous de réglage. Le réglage est indépendant de l'angle de braquage et doit forcément correspondre à un compromis.

Il est également connu par la demande de brevet US-A-2 115 256 un dispositif où le porte moyeu est monté solidaire d'un excentrique sur un de ses axes de rotation. Dans ce dispositif, la variation de l'angle de carrossage et de l'angle de chasse, induite en fonction de l'angle de braquage sera directement déterminée par la géométrie de l'excentrique et les forces de frottement de l'excentrique sur la branche inférieure de l'axe avant.

Dans un tel dispositif, les conditions de rotation des deux roues avant pouvant être différentes, en particulier au niveau des frottements, la variation de l'angle de carrossage pourra être différente pour la roue avant gauche par rapport à la roue avant droite.

La présente invention a pour but d'éviter ce genre de compromis et de proposer un dispositif de règlage de l'angle de carrossage qui permette de maintenir entre le pneumatique et le sol une surface de contact idéale.

Ce but est, atteint grâce aux caractéristiques dèfinies dans la partie caractérisante de la revendication 1.

Selon une autre particularité, l'excentrique est monté sur les éléments du système de suspension et entraîné en déplacement de façon que l'angle de chasse varie au moins en fonction du rayon de braquage.

De cette façon l'angle de carrossage des roues directrices varie en fonction du rayon de braquage pour maintenir entre le pneumatique et le sol une surface de contact idéale.

Un autre but de l'invention est de proposer un dispositif adaptable aussi bien à un dispositif de suspension à double triangle qu'à un dispositif de type Mac Pherson.

Selon une première particularité, ce but est atteint par le fait que l'extrémité mobile du porte-moyeu est le point supérieur d'une suspension à double triangle et le point de pivotement est monté excentré vers l'intérieur du véhicule par rapport à l'axe de symétrie de l'excentrique.

Selon une autre particularité, un levier d'attaque entraîne la rotation du porte-moyeu de la roue et une tringlerie reliée à la crémaillère de direction commande la rotation de l'excentrique dans un sens opposé à celle du porte-moyeu.

Selon une autre particularité, l'extrémité du porte-moyeu est montée mobile en rotation dans l'excentrique lui-même monté mobile en rotation sur un des points d'attache d'un dispositif de suspension de la roue.

Selon une autre particularité, l'axe inférieur de pivotement du porte-moyeu est monté excentré vers l'extérieur du véhicule par rapport à l'axe de symétrie de l'excentrique dans lequel l'axe de rotation est excentré, un levier d'attaque relié à la crémaillère de direction entraîne la rotation du porte-moyeu de la roue et une tringlerie reliée à la crémaillère de direction commande la rotation de l'excentrique dans le même sens que celui du porte-moyeu.

Un autre but de l'invention est de permettre une modification de l'angle de carrossage ou de chasse en fonction d'autres paramètres.

Ce but est atteint par le fait que la rotation de l'excentrique est commandée de façon homothétique par un dispositif tenant compte d'un paramètre différent de la rotation du porte-moyeu.

Selon une autre particularité la position de l'excentrique est modifiée également en fonction d'une commande représentative des mouvements de la suspension du véhicule.

Selon une autre particularité la position de l'excentrique est modifiée également en fonction d'une commande représentative de la vitesse du véhicule.

Selon une autre particularité la commande est fournie par un ensemble de tringlerie.

Un autre but de l'invention est de permettre une modification de l'angle de carrossage des roues arrières en fonction de l'angle de braquage.

Ce but est atteint par le fait que des moyens de renvoi entre la commande de braquage des roues avant modifie l'angle de carrossage des roues arrière en fonction de cet angle de braquage.

Un dernier but de l'invention est de proposer un dispositif de réglage de l'angle de carrossage qui prenne en compte les mouvements de la suspension du véhicule.

Ce but est atteint par le fait que l'excentrique est monté dans la base d'un des triangles de la suspension au niveau de son axe de suspension et le porte-moyeu est monté pivotant au sommet de chaque triangle de suspension.

Selon une autre particularité les moyens de renvoi sont hydrauliques, pneumatiques ou électriques.

Selon une autre particularité les moyens de renvoi sont mécaniques.

D'autres caractéristiques et avantages de la présente invention apparaîtront plus clairement à la lecture de la description ci-après, faite en référence aux dessins annexés dans lesquels:
- la figure 1 représente une vue de face d'un train avant droit d'un véhicule à suspension à double triangle équipé du dispositif selon l'invention;
- la figure 2 représente une vue du dessus du dispositif de l'invention équipant une suspension à double triangle;
- les figures 3 à 5 représentent schématiquement les différentes positions occupées par le dispositif de l'invention dans les trois positions possibles de braquage d'un train avant gauche;
- la figure 6 représente une vue de devant d'une suspension du type Mac Pherson équipé d'un dispositif de règlage selon l'invention;
- la figure 7 représente une vue schématique d'un véhicule équipé sur ses quatre roues de dispositifs de correction de l'angle de carrossage selon l'invention;
- la figure 8 représente une vue schématique d'un dispositif prenant en compte la vitesse du véhicule pour faire varier l'angle de carrossage;
- la figure 9A représente l'angle de carrossage;
- la figure 9B représente l'angle de chasse;
- la figure 10 représente schématiquement le comportement de la suspension et des roues d'un véhicule soumis à un mouvement de roulis;
- la figure 11 représente le comportement du même véhicule soumis au même mouvement de roulis lorsque ce dernier est équipé d'un dispositif de variation de l'angle de carrossage selon l'invention;
- la figure 12 représente une vue de face d'un dispositif de correction de l'angle de carrossage en fonction des mouvements de la suspension;
- la figure 13A représente une vue de devant d'une autre variante de réalisation de l'invention;
- la figure 13B représente une vue de dessus de la variante de réalisation de l'invention selon la figure 13A.

Le principe de l'invention consiste, comme représenté aux figures 1 et 2 à équiper un des triangles d'une suspension à double triangle d'un dispositif excentrique (13). La suspension à double triangle (1O, 11) supporte le porte-moyeu (12) dont l'extrémité inférieure (12O) est montée pivotante sur le bras triangulaire inférieur (1O). L'extrémité supérieure (121) du porte-moyeu (12) est montée pivotante selon un axe excentré (132) dans une pièce (13), constituant un excentrique. Cette pièce (13) est montée pivotante dans le bras triangulaire supérieur (11), de façon à tourner autour de son axe de rotation (130). Le déplacement en rotation de la pièce cylindrique (13) autour de son axe (130) est commandé par un levier (131) solidaire de la pièce cylindrique (13) et dont l'extrémité libre est elle-même reliée à un deuxième levier (133). La deuxième extrémité de ce levier (133) est rendue solidaire par un point d'articulation (J) d'une biellette (20). Ce point (J) est situé entre les deux extrémités de cette biellette. Une première extrémité de la biellette (20) est solidaire en un point d'articulation (K), de la crémaillère de la direction tandis que la deuxième extrémité de cette biellette (20) est articulée en un point (D) avec une extrémité d'un levier (122) dont l'autre extrémité est solidaire du bras (12) porte-moyeu.

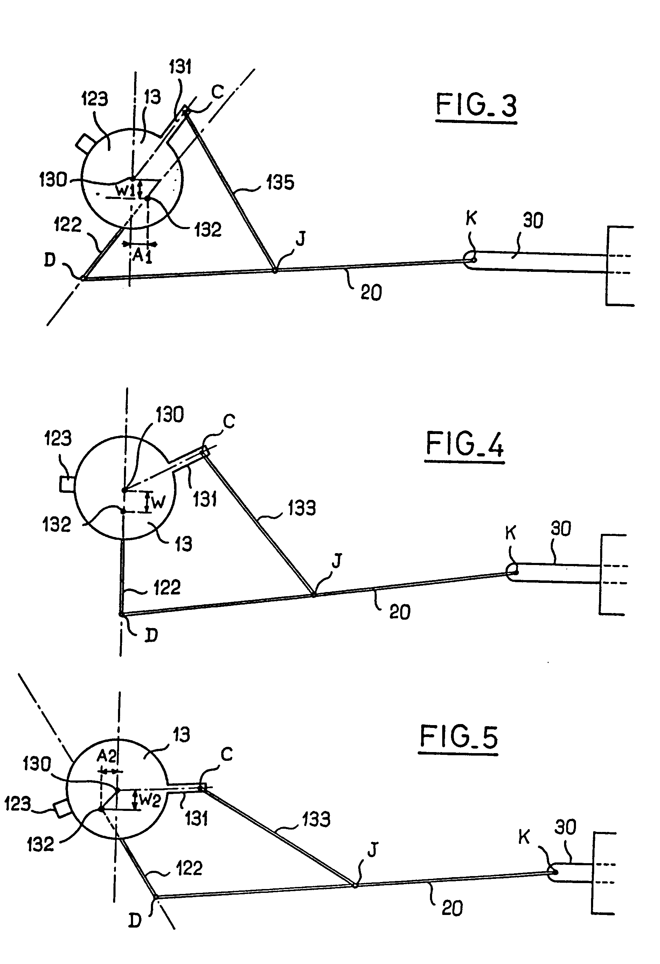

Le fonctionnement du dispositif décrit va être explicité à l'aide des figures 3,4 et 5 montrant les positions des différents éléments en fonction des différents angles de braquage pour un demi-train avant gauche d'un véhicule.

Sur la figure 4 les roues sont droites et l'angle de carrossage est nul. En effet l'axe (132) de symétrie du porte-moyeu (12) est contenu dans le plan longitudinal parallèle à la roue et passant par le centre de symétrie de la pièce cylindrique (13). Les longueurs des biellettes (133, 122, 131) et de la bielle (20) ainsi que les points d'attache (C, J, D) sont prévus, de façon que, lorsque la crémaillère est dans sa position neutre (sans braquage), l'axe du dispositif excentrique et l'axe de symétrie du bras (12) sont dans un plan parallèle à la direction d'avancement du véhicule.

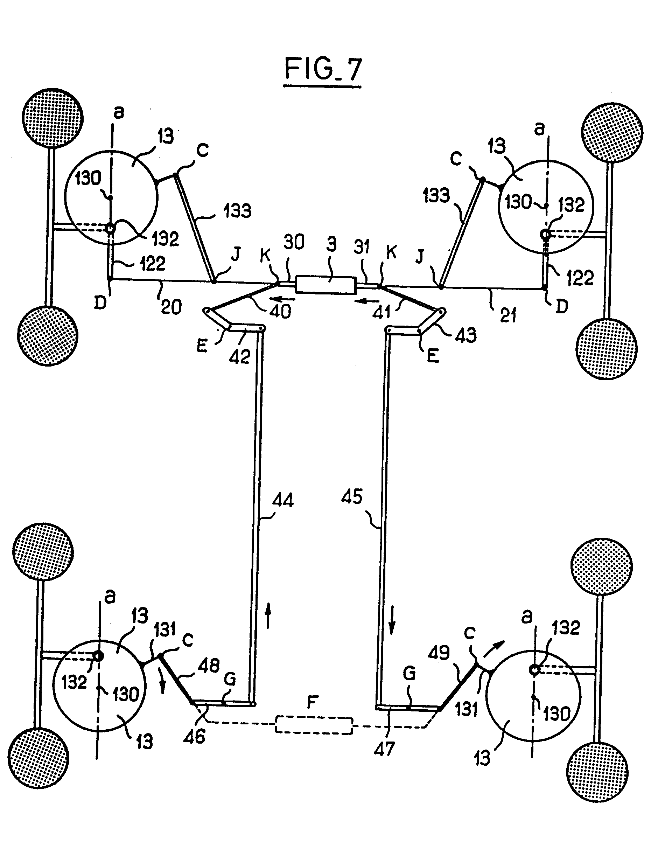

Sur la figure 3 les roues sont braquées à droite, le moyeu (123) a été entraîné en rotation dans le sens des aiguilles d'une montre par le levier (122) relié à l'extrémité de la bielle (20) associée à la crémaillère de direction et le levier (131) commandant la rotation de la pièce excentrique (13) a été entraîné dans le sens de rotation anti-horaire par la biellette (133) reliée au point (J) de la bielle (20). L'axe de symétrie (132) du bras (12) a été déplacé en rotation en sens inverse du sens de rotation du moyeu (23). Cet axe (132) se trouve sur la droite de l'axe (130) de symétrie de l'excentrique (13) et engendre un carrossage négatif de la roue. Comme on peut le comprendre, l'angle négatif de carrossage augmente progressivement avec le rayon de braquage. De même, comme on peut le comprendre à l'aide de la figure 7, dans le même temps, l'extrémité droite (31) de la crémaillère de direction ayant subi un déplacement tendant à faire rentrer la bielle (31) dans le boîtier (3) de crémaillère, le demi-train avant droit subit un mouvement inverse donnant un carrossage positif à la roue avant droite.

La figure 5 montre la cinématique du mouvement pour un braquage des roues à gauche. A l'inverse de la figure 3, l'axe de symétrie (132) du porte-moyeu (12) se trouve à gauche de l'axe longitudinal (130) de la suspension et cette disposition provoque un carrossage positif de la roue avant gauche. De même dans cette configuration de braquage à gauche, la roue avant droite prendra un carrossage négatif puisque dans ce cas, la biellette (31) sortira dans une proportion plus importante du boîtier de crémaillère (3) et déplacera le point d'articulation (D) au-delà du plan de symétrie de la suspension et vers l'extérieur. De plus, comme on peut le voir sur les figures 3 à 5, la variation du carrossage (A1, A2) entraîne une variation sensible de l'angle de chasse entre les valeurs (W), (W1), (W2). Ainsi l'angle de chasse (W) diminue lorsque le rayon de braquage augmente. Cette variation de l'angle de chasse pourra être inversée par un montage symétrique. Il est bien évident que le point de liaison (J) entre la biellette (133) et la bielle (20) de liaison à la crémaillère de direction (30) pourra être déplacé pour faire varier l'angle de carrossage obtenu pour un rayon de braquage donné, de façon à adapter cet angle de carrossage en fonction des caractéristiques de la suspension.

De même la description a été faite avec un dispositif placé dans le triangle supérieur de la suspension mais il est bien évident que le dispositif pourrait s'adapter dans le triangle inférieur de la suspension, en inversant la cinématique pour obtenir les mêmes variations d'angle de carrossage en fonction des braquages. Ainsi le montage de l'excentrique dans le bras (10) inférieur est particulièrement avantageux dans le cas d'une suspension du type Mac Pherson représenté à la figure 6. Sur ce montage c'est le déplacement de l'axe inférieur (120) du porte-moyeu (12) qui, par rotation de l'excentrique (13) modifie l'angle de carrossage en fonction du rayon de braquage. Dans ce montage, pour obtenir un angle de carrossage négatif, l'axe de symétrie (20) du porte-moyeu (12) doit se trouver à gauche de l'axe de symétrie (130) de l'excentrique (13) et les leviers (131) et (122) doivent tourner dans des sens de rotation identiques pour que le carrossage augmente avec le braquage. Pour les trains avant à double triangulation, le dispositif pourra être monté indifféremment sur l'axe inférieur (120) ou supérieur (121) du porte-moyeu (12). On choisira l'un ou l'autre montage selon la simplicité de réalisation qu'il entraîne.

La figure 7 représente un dispositif de variation du carrossage des roues avants et des roues arrières d'un véhicule. La sortie gauche (30) de la crémaillère (3) est reliée par une tringle (40) à une tige (42) articulée en son milieu autour d'un point (E). La deuxième extrémité de cette tringle (42) est reliée à une tringle de transmission (44) du mouvement à une biellette pivotant (46) autour d'un point (G) milieu. La deuxième extrémité de cette biellette (46) est reliée à une bielle (48) articulée en son point (C) à l'extrémité du levier (131) pour provoquer la rotation de l'excentrique (13) de la roue arrière gauche. De même l'extrémité droite (31) de la crémaillère (3) est reliée par une tringle (41) et un levier pivotant (43) à une tringle de transmission (45). Cette tringle (45) est reliée à une extrémité d'un levier pivotant (47) autour d'un point (G) dont l'autre extrémité commande une tringle (49) qui est elle-même reliée au point d'articulation (C) de l'extrémité du levier (131) de commande de l'excentrique (13) de la roue arrière droite. Comme on peut le voir suivant les flèches de la figure 7, lorsque la crémaillère (3) se déplace de façon à faire effectuer aux roues avant un braquage vers la droite, la tringle (44) est déplacée vers l'avant du véhicule tandis que la tringle (45) est déplacée vers l'arrière. Ce mouvement provoque la rotation de l'excentrique gauche et droit dans le sens horaire. Ainsi la roue arrière gauche suit la même variation d'angle de carrossage que la roue avant correspondante. Il en est de même pour la roue arrière droite. On remarquera que dans le montage de la figure (7) l'angle de chasse des roues arrière est inversé par rapport à l'angle de chasse des roues avant. En effet, l'axe (132) de symétrie du bras est placé en avant par rapport à l'axe de symétrie (130) de l'excentrique, pour les roues arrières.

Dans une variante de réalisation on peut remplacer le système de renvoi mécanique (40 à 47) par un verin (3) hydraulique, électrique ou pneumatique asservi à la commande (3) de la direction et actionnant directement les excentriques (13) des roues arrières.

La figure 8 montre une réalisation un peu plus sophistiquée dans laquelle les variations du carrossage sont pilotées par un système hydraulique ou électrique asservi à la vitesse du véhicule. Ce pilotage complémentaire permet ainsi d'augmenter ou de diminuer la variation du carrossage avec la vitesse. Dans cette figure les éléments identiques reprennent les mêmes références. Une tige (24) est montée coulissante ou par rapport à la carrosserie . Cette tige (24) est commandée à son extrémité (240) par un dispositif hydraulique ou électrique dont les déplacements sont fonction de la vitesse du véhicule. Le point (J) d'articulation de la tringle (133) de commande de l'excentrique (13) est situé sur la tringle (24) dont la seconde extrémité (L) est articulée sur une tige (22) qui est elle-même reliée au point d'artuclation (K) de l'extrémité (30) de la crémaillère (3). Lorsque la vitesse du véhicule est constante, le point (J) décrit une courbe homothétique de celle décrite par le point (L) lorsque l'on braque les roues. Lorsque la vitesse varie on modifie le rapport d'homothétie. Ainsi en déplaçant la tige (24) on fait varier l'importance du déplacement de la tige (133) en fonction du déplacement du point (K) de l'extrémité de la crémaillère (30). Ce système permet donc de modifier la rotation de l'excentrique (13) en fonction d'un paramètre tel que la vitesse du véhicule. D'autres paramètres pourraient également être pris en compte, telle que par exemple la charge du véhicule ou tout autre élément pouvant intervenir sur le compartiment du véhicule.

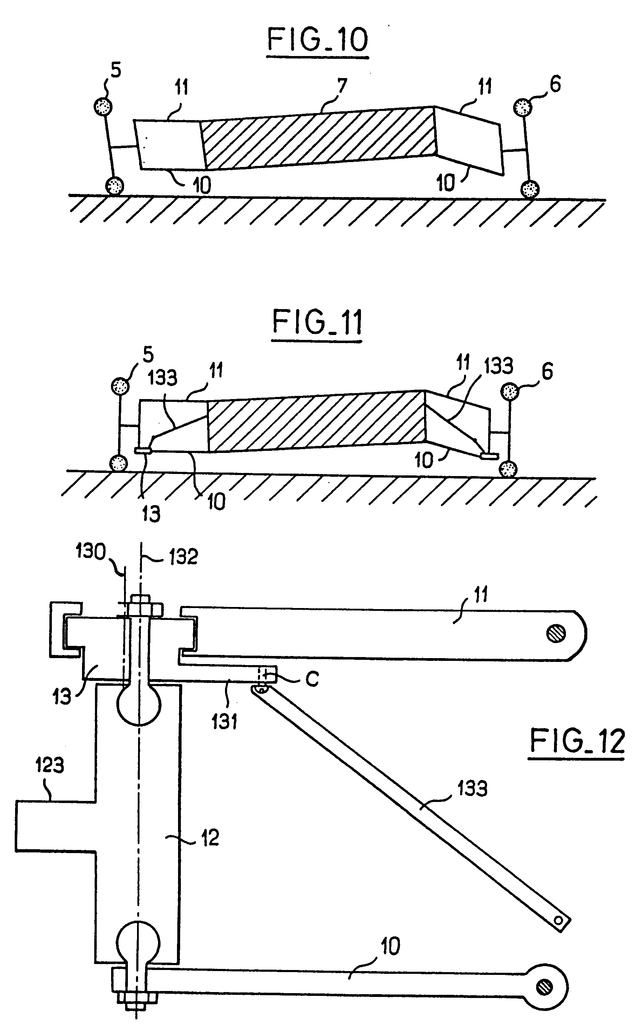

La figure 10 représente schématiquement la carrosserie (7) d'un véhicule reliée par les bras d'articulation (11, 10) à chacun des trains de roues (5, 6). Ce véhicule équipé d'une suspension triangulée classique est soumis à un roulis. Dans ce cas les roues prennent par rapport au sol un angle de carrossage important et dans le mauvais sens. Ceci réduit donc l'adhérence des pneumatiques.

Les figures 11 et 12 représentent un exemple d'application de l'invention au problème ci-dessus. Sur cette figure 11 le même véhicule (7) équipé d'une suspension triangulée (10, 11) est équipé d'un correcteur de carrossage à excentrique. L'excentrique est commandé par une biellette (133) fixée au chassis en un point de fixation proche du point de fixation du triangle (10) opposé à celui (11) incorporant l'excentrique (13). Les variations de hauteur de suspension modifient la distance de l'excentrique par rapport au point fixe et la biellette (133) de longueur fixe entraîne en rotation l'extrémité (131) de l'excentrique (13).

La variation du carrossage avec la hauteur de suspension pourra être avantageusement associée à la correction en fonction de l'angle de braquage sur les roues directrices par un système similaire à celui décrit en liaison avec la figure 8. Dans ce cas le coulisseau (24) pourra être commandé par la hauteur de la suspension et modifiera en fonction de la compression de la suspension l'amplitude des variations du carrossage au cours du braquage.

Dans la variante correspondant aux figures 3 à 5, la variation du carrossage est fonction de la variation entre l'angle de braquage et la rotation du levier (131) solidaire de l'excentrique (13) et par conséquent de la géométrie des pièces (122, 20, 133 et 131).

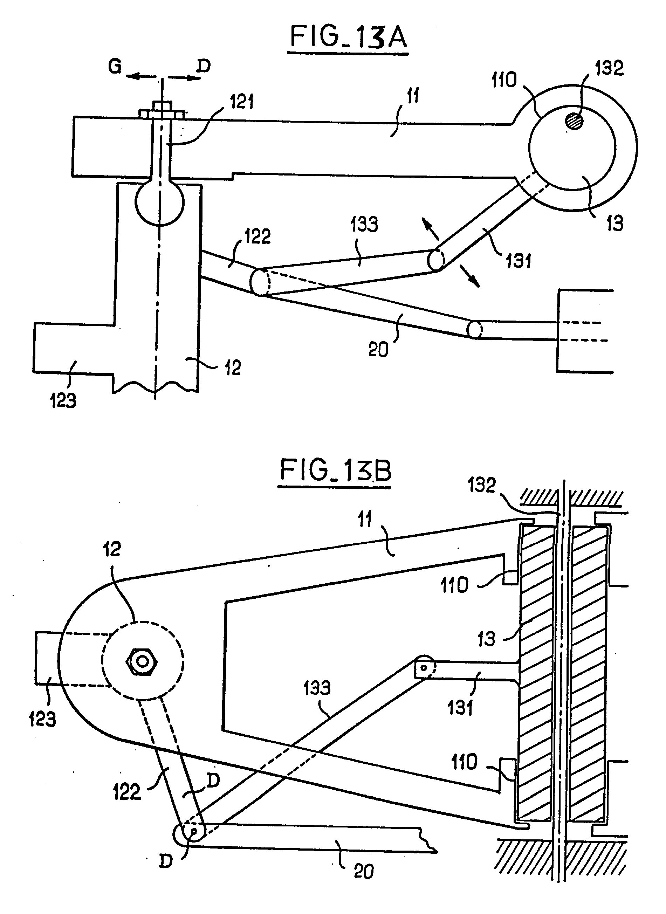

Les figures 13A et 13B représentent une dernière variante de l'invention particulièrement avantageuse sur les véhicules de compétition où la recherche du poids minimum non suspendu est souhaitée. Dans cette variante, le porte-moyeu (12) est monté pivotant en rotation par un axe (121) au sommet d'un triangle (11) de suspension dont la base (110) opposée au sommet est articulée sur une pièce cylindrique (13) montée mobile en rotation par rapport au chassis du véhicule sur un axe (132) excentré par rapport à la base (110) du triangle. Cette pièce (13) est actionnée par un levier (131) lui-même commandé par une tringlerie de renvoi (133) reliée en un point d'articulation (D) à la tringle (20) de commande du braquage des roues par l'intermédiaire du levier de braquage (122). Ainsi en fonction du rapport des tringleries et des leviers, et en fonction de l'angle de braquage, l'axe de symétrie du pivot de rotation du porte-moyeu (12) est déplacé à gauche ou à droite, selon les flèches (G) ou (D) de la figure 13A. De la même manière la commande de l'excentrique (131) peut être asservie, soit au rayon de braquage, soit à la hauteur des suspensions, soit aux deux, soit également à la vitesse du véhicule. La commande de l'excentrique (13) entraîne dans ce cas-là tout le triangle (11) en déplacement à gauche ou à droite et engendre donc de la même manière que pour les réalisations précédentes, un carrossage négatif ou un carrossage positif.

## Revendications

1. Dispositif de règlage de l'angle de carrossage de la roue d'un véhicule dont l'axe de rotation est monté sur un porte-moyeu (12) comportant une extrémité supérieure et une extrémité inférieure respectivement montées pivotantes sur des éléments supérieur et inférieur (11, 10) du système de suspension éleménts sur l'un desquels est monté un excentrique (13) dont la rotation permet d'assurer un déplacement de l'extrémité correspondante du porte-moyeu (12) par rapport à un plan vertical parallèle à la direction longitudinale du véhicule, caractérisé en ce que l'excentrique est monté sur les éléments du système de suspension (10, 11) et entraîné en rotation dans le même sens ou en sens inverse du sens de rotation du porte-moyeu (12) par une tringlerie (33) indépendante du porte-moyeu (12) et reliée à des moyens de commande de la rotation du porte-moyeu (12) définissant le rayon de braquage, de façon qu'au moins l'angle de carrossage varie au moins sous la commande des moyens de commande du rayon de braquage.

2. Dispositif selon la revendication 1, caractérisé en ce que l'excentrique est monté sur les éléments du système de suspension (10, 11) et entraîné en déplacement de façon que l'angle de chasse varie au moins en fonction du rayon de braquage.

3. Dispositif selon la revendication 1 ou 2, caractérisé en ce qu'un levier d'attaque (122) entraîne la rotation du porte-moyeu (12) de la roue et une tringlerie (133) reliée à la crémaillère (20) de direction commande la rotation de l'excentrique (13) dans un sens opposé à celle du porte-moyeu (123).

4. Dispositif selon la revendication 1 ou 2, caractérisé en ce que l'extrémité du porte-moyeu (12) est montée mobile en rotation dans l'excentrique (13) luimême monté mobile en rotation sur un des points d'attache d'un dispositif de suspension (10, 11) de la roue.

5. Dispositif selon la revendication 4, caractérisé en ce que l'axe inférieur (120) de pivotement du porte-moyeu (12) est monté excentré vers l'extérieur du véhicule par rapport à l'axe de symétrie (130) de l'excentrique (13) dans lequel l'axe de rotation (120) est excentré, un levier d'attaque (122) relié à la crémaillère de direction (20) entraîne la rotation du porte-moyeu (12) de la roue et une tringlerie (133) reliée à la crémaillère de direction commande la rotation de l'excentrique (13) dans le même sens que celui du porte-moyeu (123).

6. Dispositif selon la revendication 3, caractérisé en ce que l'extrémité mobile (12) du porte-moyeu (12) est le point supérieur d'une suspension à double triangle (10, 11) et le point de pivotement est monté excentré vers l'intérieur du véhicule par rapport à l'axe de symétrie (130) de l'excentrique (13).

7. Dispositif selon une des revendications précédentes, caractérisé en ce que la rotation de l'excentrique est commandée de façon homothétique par un dispositif tenant compte d'un paramètre différent de la rotation du porte-moyeu.

8. Dispositif selon une la revendication 7, caractérisé en ce que la position de l'excentrique (13) est modifiée également en fonction d'une commande représentative des mouvements de la suspension du véhicule.

9. Dispositif selon la revendication 7, caractérisé en ce que la position de l'excentrique (13) est modifiée également en fonction d'une commande représentative de la vitesse du véhicule.

10. Dispositif selon une des revendications précédentes, caractérisé en ce que la commande est fournie par un ensemble de tringlerie.

11. Dispositif selon la revendication 6 ou 5, caractérisé en ce que des moyens de renvois (40, 49) entre la commande de braquage des roues avant et les roues arrière modifient l'angle de carrossage des roues arrière en fonction du rayon de braquage.

12. Dispositif selon la revendication 1, caractérisé en ce que l'excentrique (13) est monté dans la base d'un des triangles de la suspension (10 ou 11) au niveau de son axe de suspension et le porte-moyeu (12) est monté pivotant au sommet de chaque triangle de suspension (10, 11).

13. Dispositif selon la revendication 11, caractérisé en ce que les moyens de renvoi sont hydrauliques, pneumatiques ou électriques.

14. Dispositif selon la revendication 11, caractérisé en ce que les moyens de renvoi sont mécaniques.

## Claims

1. Device for adjusting the camber angle of a vehicle wheel, of which the rotational shaft is mounted on a hub-carrier (12) comprising an upper end and a lower end which are mounted respectively so as to pivot on upper and lower components (11, 10) of the suspension system, on one of which components there is mounted a cam (13), of which the rotation enables the end corresponding to the hub-carrier (12) to be displaced, relative to a vertical plane parallel to the longitudinal direction of the vehicle, characterised in that the cam is mounted on the components of the suspension system (10, 11) and is rotated in the same direction as, or in the inverse direction to the direction of rotation of the hub-carrier (12) by means of a rod assembly (33) which is independent of the hub-carrier (12) and is connected to means for controlling the rotation of the hub-carrier (12), thus defining the radius of the angle of lock, such that at least the camber angle is varied at least under the control of the means controlling the radius of the angle of lock.

2. Device according to Claim 1, characterised in that the cam is mounted on the components of the suspension system (10, 11) and is displaced such that the caster angle varies at least in accordance with the radius of the angle of lock.

3. Device according to either of Claims 1 or 2, characterised in that an engagement lever (122) rotates the hub-carrier (12) of the wheel and a rod assembly (133) connected to the steering rack (20) rotates the cam (13) in a direction opposite that of the hub-carrier (123).

4. Device according to Claim 1 or 2, characterised in that the end of the hub-carrier (12) is mounted so as to rotate in the cam (13), which in turn is mounted so as to rotate on one of the attachment points of a suspension device (10, 11) of the wheel.

5. Device according to Claim 4, characterised in that the lower pivot shaft (120) of the hub-carrier (12) is mounted eccentrically towards the outside of the vehicle relative to the axis of symmetry (130) of the cam (13) in which the rotational shaft (120) is eccentric, an engagement lever (122) connected to the steering rack (20) rotates the hub-carrier (12) of the wheel, and a rod assembly (133) connected to the steering rack rotates the cam (13) in the same direction as the hub-carrier (123).

6. Device according to Claim 3, characterised in that the movable end (12) of the hub-carrier (12) is the upper point of a double wishbone suspension device (10, 11) and the pivoting point is mounted eccentrically towards the inside of the vehicle relative to the axis of symmetry (130) of the cam (13).

7. Device according to any one of the preceding Claims, characterised in that the cam is rotated homothetically by a device which takes into account a parameter other than rotation of the hub-carrier.

8. Device according to Claim 7, characterised in that the position of the cam (13) is also modified in accordance with a control device which represents the suspension movements of the vehicle.

9. Device according to Claim 7, characterised in that the position of the cam (13) is also modified in accordance with a control device which represents the vehicle velocity.

10. Device according to any one of the preceding Claims, characterised in that the control is provided by a rod assembly.

11. Device according to either of Claims 6 or 5, characterised in that return means (40, 49) between the system for controlling the angle of lock of the front wheels and the rear wheels modify the camber angle of the rear wheels in accordance with the radius of the angle of lock.

12. Device according to Claim 1, characterised in that the cam (13) is mounted in the base of one of the suspension wishbones (10 or 11) on its suspension axis, and the hub-carrier (12) is mounted so as to pivot at the top of each suspension wishbone (10, 11).

13. Device according to Claim 11, characterised in that the return means are hydraulic, pneumatic or electrical.

14. Device according to Claim 11, characterised in that the return means are mechanical.

## Patentansprüche

1. Vorrichtung zur Einstellung des Sturzwinkels des Rades eines Fahrzeugs, dessen Drehachse auf einem Nabenträger (12) angebracht ist, der ein oberes Ende und ein unteres Ende aufweist, die jeweils schwenkbar auf oberen und unteren (11, 10) Elementen des Aufhängungssystems angebracht sind, wobei auf einem der Elemente ein Exzenter (13) angebracht ist, dessen Drehung es ermöglicht, eine Verschiebung des entsprechenden Endes des Nabenträgers (12) bezüglich einer vertikalen, zur Längsrichtung des Fahrzeugs parallelen Ebene sicherzustellen, dadurch gekennzeichnet, daß der Exzenter auf den Elementen des Aufhängungssystems (10, 11) angebracht und in der gleichen Richtung oder in zur Drehrichtung des Nabenträgers (12) umgekehrter Richtung durch ein Gestänge (33) in Drehung versetzt wird, das unabhängig von dem Nabenträger (12) und mit Steuereinrichtungen für die Drehung des Nabenträgers (12) verbunden ist, die den Wenderadius so festlegen, daß wenigstens der Sturzwinkel sich wenigstens unter der Einwirkung der Steuereinrichtungen des Wenderadius verändert.

2. Vorrichtung nach Anspruch 1, dadurch gekennzeichnet, daß der Exzenter auf den Elementen des Aufhängungssystems (10, 11) angebracht ist und so verschoben wird, daß der Nachlaufwinkel sich wenigstens in Abhängigkeit vom Wenderadius verändert.

3. Vorrichtung nach Anspruch 1 oder 2, dadurch gekennzeichnet, daß ein Angriffshebel (122) die Drehung des Nabenträgers (12) des Rades bewirkt und ein mit der Lenkzahnstange (20) verbundenes Gestänge (133) die Drehung des Exzenters (13) in einer zu der des Nabenträgers (123) entgegengesetzten Richtung steuert.

4. Vorrichtung nach Anspruch 1 oder 2, dadurch gekennzeichnet, daß das Ende des Nabenträgers (12) drehbeweglich in dem Exzenter (13) angebracht ist, wobei dieser wiederum drehbeweglich auf einem der Anschlußpunkte einer Aufhängungsvorrichtung (10, 11) des Rades angebracht ist.

5. Vorrichtung nach Anspruch 4, dadurch gekennzeichnet, daß die untere Schwenkachse (120) des Nabenträgers (12) exzentrisch zum Äußeren des Fahrzeugs hin bezüglich der Symmetrieachse (130) des Exzenters (13) angebracht ist, bei welchem die Drehachse (120) exzentrisch ist, ein mit der Lenkzahnstange (20) verbundener Angriffshebel (122) die Drehung des Nabenträgers (12) des Rades bewirkt und ein mit der Lenkzahnstange verbundenes Gestänge (133) die Drehung des Exzenters (13) in der gleichen Richtung wie die des Nabenträgers (123) steuert.

6. Vorrichtung nach Anspruch 3, dadurch gekennzeichnet, daß das bewegliche Ende (12) des Nabenträgers (12) der obere Punkt einer Aufhängung mit Doppeldreieck (10, 11) ist und der Schwenkpunkt exzentrisch zum Inneren des Fahrzeugs hin bezüglich der Symmetrieachse (130) des Exzenters (13) angeordnet ist.

7. Vorrichtung nach einem der vorhergehenden Ansprüche, dadurch gekennzeichnet, daß die Drehung des Exzenters homothetisch durch eine Vorrichtung gesteuert ist, die einen unterschiedlichen Parameter der Drehung des Nabenträgers berücksichtigt.

8. Vorrichtung nach Anspruch 7, dadurch gekennzeichnet, daß die Position des Exzenters (13) auch in Abhängigkeit einer für die Bewegungen der Aufhängung des Fahrzeugs repräsentativen Steuerung modifizert wird.

9. Vorrichtung nach Anspruch 7, dadurch gekennzeichnet, daß die Position des Exzenters (13) auch in Abhängigkeit einer für die Geschwindigkeit des Fahrzeugs repräsentativen Steuerung modifiziert wird.

10. Vorrichtung nach einem der vorhergehenden Ansprüche, dadurch gekennzeichnet, daß eine Gestängeanordnung für die Steuerung sorgt.

11. Vorrichtung nach Anspruch 6 oder 5, dadurch gekennzeichnet, daß Treibeinrichtungen (40, 49) zwischen der Einschlagsteuerung der Vorderräder und den Hinterrädern den Sturzwinkel der Hinterräder in Abhängigkeit vom Wenderadius modifizieren.

12. Vorrichtung nach Anspruch 1, dadurch gekennzeichnet, daß der Exzenter (13) in der Basis eines der Dreiecke der Aufhängung (10 oder 11) auf der Höhe seiner Aufhängungsachse und der Nabenträger (12) schwenkbar an der Spitze jedes Dreiecks der Aufhängung (10, 11) angeordnet sind.

13. Vorrichtung nach Anspruch 11, dadurch gekennzeichnet, daß die Treibeinrichtungen hydraulisch, pneumatisch oder elektrisch sind.

14. Vorrichtung nach Anspruch 11, dadurch gekennzeichnet, daß die Rücklaufeinrichtungen mechanisch sind.
